(19)

Europäisches
Patentamt
European
Patent Office
Office européen
des brevets

(11)  **EP 2 299 292 B1**

(12)  **EUROPEAN PATENT SPECIFICATION**

(45) Date of publication and mention
of the grant of the patent:
**11.11.2015  Bulletin 2015/46**

(51) Int Cl.:
***G01S 15/89*** (2006.01)  ***G01F 23/296*** (2006.01)

(21) Application number: **10275096.5**

(22) Date of filing: **15.09.2010**

(54) **Scanning apparatus and method**

Scanning-Vorrichtung und -Verfahren

Appareil et procédé de balayage

(84) Designated Contracting States:
**AL AT BE BG CH CY CZ DE DK EE ES FI FR GR
HR HU IE IS IT LI LT LU LV MC MK MT NL NO PL
PT RO SE SI SK SM TR**
Designated Extension States:
**BA ME RS**

(30) Priority: **15.09.2009  GB 0916162**

(43) Date of publication of application:
**23.03.2011  Bulletin 2011/12**

(73) Proprietor: **Oceanscan Limited
Aberdeen AB23 8JW (GB)**

(72) Inventors:
• **McKenzie, Graham
Aberdeen, Aberdeenshire AB24 3HX (GB)**
• **Sandilands, Donald
Peterhead, Aberdeenshire AB42 0LJ (GB)**
• **Auld, Robert
Aberdeen, Aberdeenshire AB21 0WW (GB)**
• **Monteiro, Manel
2765-392 Monte Estorie (PT)**
• **Svet, Victor
Moscow 117312 (RU)**
• **Beykov, Sergey
Moscow (RU)**

(74) Representative: **Crosby, Wendy Agnes
Murgitroyd & Company
Scotland House
165-169 Scotland Street
Glasgow G5 8PL (GB)**

(56) References cited:
**US-A- 3 202 736     US-A- 4 229 798
US-A- 4 456 982     US-A- 5 598 206
US-A- 5 670 710     US-A- 5 953 287**

## Description

This invention relates to an apparatus for scanning materials and a method for scanning and, more particularly, to a sonar apparatus which is particularly adapted for scanning fluids within containers and in particular to a sonar apparatus and method for making topographical measurements within containers of fluids such as but not limited to oil tanks.

The transportation or storage of fluids in significant volumes often involves the fluids being decanted into a large container where they may remain for varying lengths of time. Some fluids such as hydrocarbons and in particular oil, may contain varying amounts of contaminants or materials suspended within the fluid which can settle out of the fluid over time particularly when the fluid is stored within a container in a stationary condition.

In such cases a sediment or sludge layer can form on the bottom of the container. The topography of the sludge layer can vary significantly over the bottom of the container. The conditions to which both the container and the fluid are subjected such as temperature or pressure can affect the topography of the sludge layer as can any deviation from the horizontal in the base of the container. As the depth of the sludge layer increases, so the volume of the container which is available for holding fluid reduces.

Due to the varying topography of the sludge layer across the bottom of the container, it can be difficult to accurately measure the volume of fluid stored or contained within the container and therefore determine the available space for adding further fluid to the container.

A standard mechanical measurement device similar to a dipstick in a car engine may be used to give a reading as to the depth of the sludge layer but this must be inserted vertically within the tank and can only give an indication of the depth of fluid in the tank immediately beneath the point of entry. Many containers have a dedicated opening in the upper part of the container to allow for such measurements to be taken but this cannot provide any accurate information regarding sludge topography because, as mentioned above, the topography of the sludge layer can vary considerably across the bottom of the container and a reading taken beneath one point of entry cannot be used to determine the depth of the sludge layer in the vicinity surrounding the reading point.

Measuring the volume in this manner is both time consuming and also provides very low accuracy of result.

This method has further drawbacks in that in many cases, due to the nature of the sludge, an intermediate layer of sludge forms between the solid material on the bottom of the container and the fluid within the tank. This intermediate layer has a very high viscosity but is not solid. Should an operator immerse a dipstick into the container there would be no apparent indication of such a layer as there would be no resistance to the downward movement of the dipstick. Therefore an inaccurate indicate of the volume of sludge in the tank would be taken as the operator would only stop when the dipstick contacted the solid sludge layer beneath the intermediate layer.

A further known method of determining the topography of the sludge layer within the bottom of a container involves the use of infrared technology based upon temperature measurements of the external surface of the container. Oil and sludge have different thermodynamic properties and therefore when oil and sludge are contained within a metal tank, the temperature of the external surface of the tank varies depending upon the position of the layers within the tank. This provides a temperature distribution across the outer surface of the tank which permits an estimate of the sludge profile which is in contact with the container walls. It will be appreciated that such a method is at best a guesstimate of the topography of the sludge within the tank because there is no accurate information relating to the topography of the sludge and therefore such measurements are only estimates. By way of example, if the majority of the sludge were found in a layer distributed over the base of the container but not in contact with the outer walls of the container, this would hamper even any guesstimate of the volume of sludge in the container unless the temperature profile on the base of the container could also be determined.

Furthermore, the outer surface of the tank can be exposed to wide temperature variations depending upon the time of day, local weather conditions, types of fluids contained in the tank or soil conditions upon which the tank is placed. Therefore this method of determining the volume of sludge within the tank is only used to provide a very rough estimate.

Ultrasound technology has been proposed as a way of increasing the accuracy of the measurements of the topography and therefore volume of sludge within a container. Ultrasound technology is based on well-known methods of acoustic bottom or sub-bottom profiling which are widely used in seas and oceans around the world.

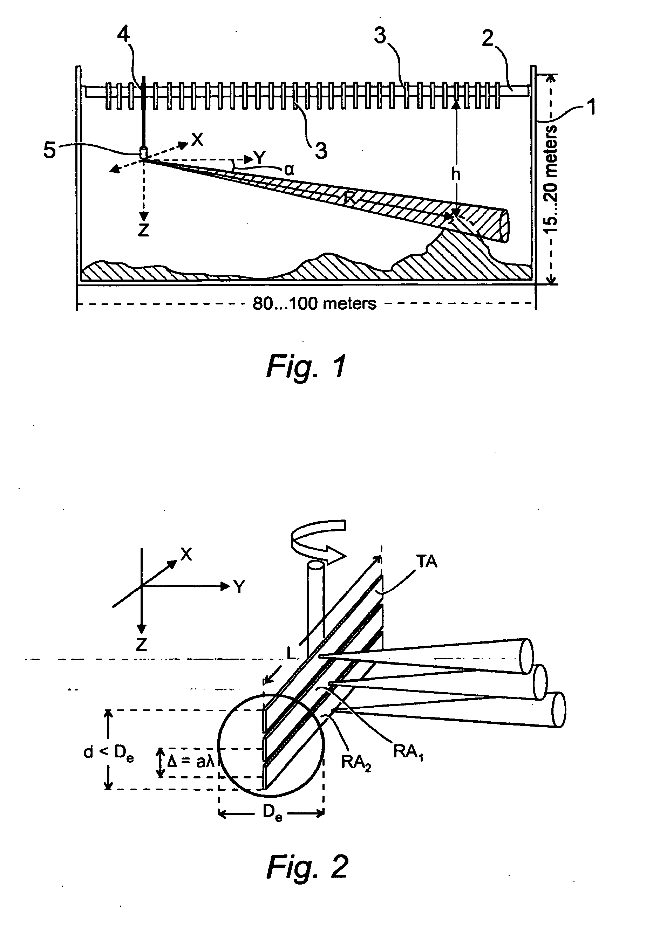

The general design of an oil tank or container 1 is shown in Figure 1. The majority of crude oil tanks are generally cylindrical in form. The tanks also have a roof 2 which sits inside the walls of the cylinder, the height of which can change depending upon the volume of fluid held within the tank. In other words, the roof has a floating design and is raised by the introduction of fluids into the container. The diameter of a typical tank may be about 50-80 meters and the height about 15-20 meters.

The underside of the roof is provided with a number of downwardly projecting legs 3 which support the roof above the base of the container when there is no fluid in the container. In a typical design, the diameter of the projecting legs is about 10cm. Removal of one of the legs provides an entry point 4 for deployment of a scanning tool 5 into the container.

The topography of the sludge within the container is shown in Figure 1. By mapping the 3D profile of the surface of the sludge, the volume of sludge within the container can be determined.

In a known ultrasound method a sonar device with a narrow beam is lowered into the oil within the container. The beam scans in two directions, x azimuthally and z vertically.

Using a pulse mode for each scanning position of the beam $(X_i, Z_j)$ provides signals $\Sigma U(X_i, Z_j, t_k)$ reflected from this part of surface $S(X_i, Z_j)$.

By measuring the time delays of the reflected signals referenced to the start time and knowing the velocity of sound within the oil in the container, the inclined distances R can be calculated.

Knowing steering vertical and horizontal angles and calculated distances $R(X_i, Z_j)$, the height of a point on the surface of the sludge can be calculated. These calculations will result in a cloud of points representing the 3D topology of the sludge.

US patents 5173882 and 5953287 describe interferometrical sonar devices with mechanical rotation of arrays on 360 degrees in the azimuth plane and mechanical or electron steering of a vertical beam in the vertical plane.

Figure 2 shows the basic principles of such a sonar device. Typically the sonar has three linear arrays: one transmitting array, TA and two receiving arrays, $RA_1$ and $RA_2$.

According to US patents 5173882 and 5953287, each receiving array is a solid PZT plate, the horizontal dimension of which is many times more than its vertical dimension.

That means that the array or in this case solid PZT element has a directivity pattern, a beam with elliptical cross section, which is very narrow in the horizontal direction (X) and rather wide in the vertical direction (z) Therefore, the array will have very good angle resolution in the horizontal direction but poor angle resolution in the vertical direction.

The transmitting array has the same directivity as the receiving array.

It is possible to measure the height of a reflecting point in the sludge layer using a device according to these patents. Two horizontal arrays with a vertical spacing $\Delta$ can be considered as a small vertical array. The directivity of this vertical array depends on the value of spacing. The greater the spacing the more narrow the beam as in a usual full sampled array. Such a two point array is known as an interferometric array.

The vertical angle may be altered by variations of phase shifts between the two horizontal arrays or by simple mechanical inclination of the arrays in a vertical plane.

Whilst such known interferometric sonar devices provide for very simple mechanical scanning with a minimum number of electronic units, the known systems have a number of disadvantages. This includes the necessity of continuous or step rotation of the sonar head around 360 degrees. Also, mechanical steering of the beam in a vertical plane or mechanical inclination of arrays is also required. Therefore for each vertical angle the operator must provide continuous horizontal rotation around 360 degrees or for each horizontal direction provide vertical scanning in all vertical sectors.

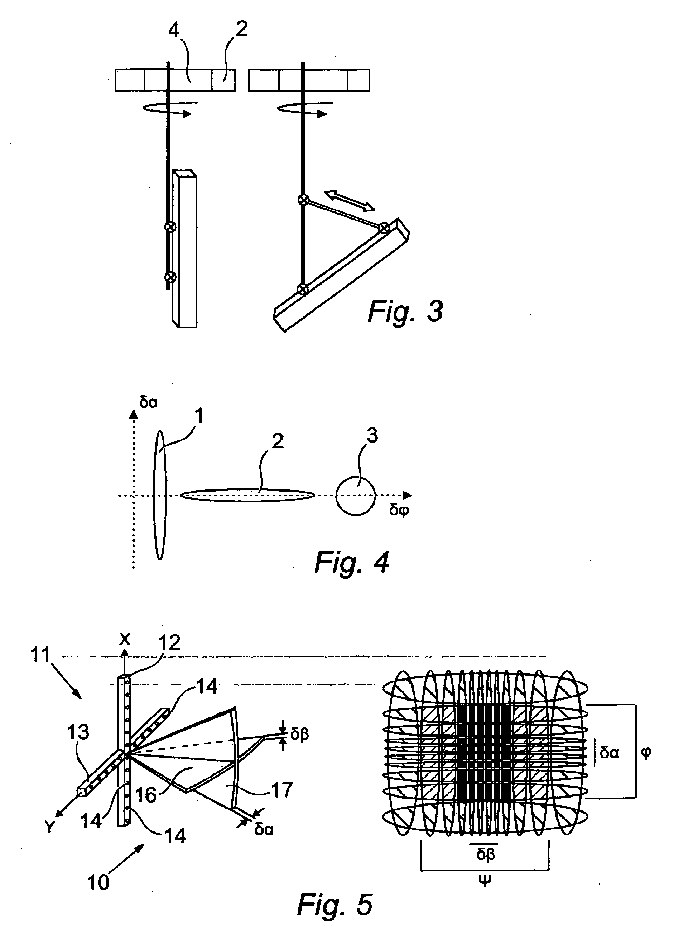

As the horizontal length of the arrays is significantly larger than the diameter of the entry point of the sonar head into the container, around 35-45 cm as opposed to about 10cm, known systems require a special design in which a mechanical unit is provided to alter the orientation of the scanner head after immersion within the tank. A typical system is shown in Figure 3.

The necessity to use the design described in the cited patents is connected with the size of the receiving arrays in the horizontal plane. This size provides rather high horizontal angle and linear resolution.

The scanning apparatus described in patent 5953287 has an operating frequency F=150 KHz. The speed of sound in crude oil is about 1400 m/sec or wavelength $\lambda = 0,93$cm. The arrays have an approximate horizontal size of about L = 400 mm. That means that the angle resolution on the (-3) dB level is equal to

$$\Delta\varphi = (50,6\ \lambda)/L = 1,1^0$$

Or the linear resolution on a maximum range of 100 meters will be $\Delta X = (R^* \Delta\varphi)/57 = 100/57 = 1,75$ meters.

As the authors of those patents stated in their description such high angle resolution provides the required accuracy of the measurement of 3D sludge topology. However, it is important to note that the vertical resolution of such a system is not high.

The topography of the surface of the sludge layer and subsequently the volume is measured by estimation of the following parameters:-

- Horizontal angle
- Vertical angle
- Height (slant distance).

Angles determine only the position of a reflecting pixel on the sludge layer. Therefore the height of this pixel is a very important parameter.

The reflecting pixel is not a point, certainly, but an area as it presented for example in Figure 4.

Here $\delta\alpha$ and $\delta\varphi$ are values of angle resolution in the horizontal and vertical planes accordingly. For example, the system described in patent 5953287 has a very high horizontal resolution $\delta\alpha$, but poor vertical resolution, $\delta\varphi$, as illustrated by ellipse 1 in Figure 4.

With reference to measurement of volume, its accuracy in a general case depends less on the form of an ellipse or cross-section on XY coordinates, but more on its square.

As mentioned above, the aperture 4 in a tank through which the scanning apparatus is deployed has a diameter of about 10 cm. For frequency F=150 KHz ($\lambda$= 1 cm) the spacing between arrays can not be more than 0,5-1 cm.

Two factors limit the value of the spacing. If spacing is more than 0,5cm the resulting beam pattern in a vertical plane will contain substantial side lobes. That means that the system will have poor stability to reverberation signasl and will generate "false" reflections or "false" heights.

The second restriction is connected with the diameter of the aperture of the entry point. As discussed above, an interferometrical sonar has three arrays, their general width can not be more that the diameter of the aperture (90 mm). This means that the vertical directivity of such a system will be about 90° or little less, in other words on maximum distance R= 100 meters the system will collect signals from a square of about 320 $m^2$ (dimensions of one pixel).

Clearly, such a system has limitations and disadvantages not least of which is that the system requires a complex mechanical design and electro motors to rotate and tilt the array unit. Crude oil is an aggressive medium and such a complex mechanical design would be subject to reliability problems. Furthermore, the time required to collect the appropriate data from the tank can be rather big.

It is therefore an object of the present invention to provide a sonar apparatus which addresses the aforementioned shortcomings of the known systems.

It is a further object of the present invention to provide a method of scanning the 3D topography of a layer of material within a tank or container which mitigates the disadvantages of known methods described above.

According to one aspect of the present invention there is provided a beamforming scanning apparatus for making topographical measurements within containers of fluids, as defined in claim 1.

Advantageously each array comprises a plurality of transducers, preferably electroacoustic transducers and most preferably PZT elements.

Preferably each transducer in the arrays has a half-wavelength spacing.

Conveniently the transmitting and receiving arrays form a unitary body.

Advantageously the apparatus further comprises processing means for processing the output signals of the receiving array.

Preferably the transmitting array is a linear array and preferably also the receiving array is a horizontal array.

Conveniently the apparatus further comprises a temperature sensor.

In a preferred embodiment the apparatus is adapted for deployment within a fluid filled container and the temperature sensor is adapted to measure the temperature of the fluid within the container.

Advantageously the sonar head is releasably mounted on the scanning apparatus. In a preferred embodiment the scanning apparatus comprises a plurality of replaceable sonar heads, each being mountable to the scanning apparatus at a different angle relative to an axis of the apparatus.

According to a further aspect of the present invention there is provided a method of determining the 3D topography of a layer of material within a tank or container , as defined in claim 14.

Advantageously the method further comprises the step of measuring the temperature of the material within the container.

Embodiments of the present invention will now be described with reference to the accompanying drawings in which:-

Figure 1 is a schematic longitudinal view of an oil tank incorporating a scanning apparatus according to a prior art design;

Figure 2 is a schematic perspective view of the prior art scanning apparatus shown in Figure 1;

Figure 3 is a further schematic perspective view of the scanning apparatus of Figure 2 in use;

Figure 4 is an illustration of the angle of resolution in the horizontal and vertical axis of the scanning apparatus of Figure 2;

Figure 5a is a schematic perspective view of a scanning apparatus according to one aspect of the present invention;

Figure 5b is a beam pattern showing produced by the crossed array of the scanning apparatus of Figure 5;

Figure 6 is a schematic circuit diagram of the processing circuitry for the scanning apparatus of Figure 5;

Figure 7 is a 3D schematic view of the geometry of the transmitting and receiving arrays of Figure 5;

Figure 8a is a schematic cross sectional view of the scanning apparatus of Figure 5 in operation in a container;

Figure 8b is a view of the sonar head of the scanning apparatus showing the inclination of the transducers;

Figure 8c is a schematic cross sections view of the scanning apparatus in an alternative container;

Figure 8d is an alternative form of sonar head;

Figure 9 is a schematic view of the scanning apparatus of Figure 5 in use showing side lobes of the scanning beam;

Figure 10a is a view of a standard transducer element;

Figure 10b is a plan view of a transducer element of the scanning apparatus of the present invention;

Figure 10c is a front view of a transducer element of the receiving array of the scanning apparatus of Figure 5;

Figure 10d is a front view of a transducer element of the transmitting array of the scanning apparatus of Figure 5;

Figure 11 is a schematic view of the geometry of a vertical beam with different forms of elements;

Figures 11a-d illustrate beam plots of transmitting elements of different diameter and height;

Figure 12a-c are schematic views of different arrangements of the transmitting and receiving arrays of the scanning apparatus of Figure 5;

Figure 13a illustrates echo signals after correlation compression using a scanning apparatus according to one embodiment of the present invention;

Figure 13b illustrates two types of estimation of slant distances and heights of a point on the surface of a layer of material,

Figures 14 a and b are plots illustrating the angles of scanning for stacked and overlapping beams;

Figures 15 a and b are temperature plots illustrating the temperature gradient within a container of crude oil.

There are some peculiarities of oil tanks which can result in problems in an acoustical survey.

Large tanks may have diameters from 50m up to 100m. They can have different types of bottoms and most tanks have floating roofs with many supporting legs. Therefore oil tanks are closed areas and as such must create a strong acoustic reverberation, because each of the surfaces bottom, walls and roof are steel constructions. In some cases the oil can be heated within the container and may be subject to agitation within the container and therefore other mechanical elements or components may be present in the container which can provide further reflection points for a scanning beam within the container.

The general knowledge of some very important acoustical parameters of crude oil is very poor. One important parameter is the speed of sound in crude oil, $C_{oil}$ and this is generally unknown as a rule. The available parameters are viscosity of the oil, its density and the average temperature of the oil inside tank.

For optimum performance and therefore high accuracy of volume estimation it is vital to know the temperature profile $T(h)$ within the tank, where h - tank depth and the sound speed profile $C_{oil}(h)$ and $C_{oil}(T)$ and in the best case the general dependence $C (h, T, P)$, where P is static pressure. Generally the information about $T(h)$ and $C_{oil}(h, T)$ is absent.

Turning now to the Figures, an embodiment of the present invention is shown in Figure 5 and comprises a scanning apparatus 10 which is particularly suited to measuring the 3D topography of a layer of material such as sludge and hence the volume of the material or sludge in a container such as an oil tank or container of other fluid.

The apparatus comprises a sonar head 11 comprising an array of transmitting elements 12 and an array of receiving elements 13. The transmitting and receiving arrays are mounted orthogonally with respect to one another.

In the embodiment shown in Figure 5, each of the transmitting and receiving arrays comprise a plurality of individual electroacoustic transducer elements 14 which in the preferred embodiment are PZT elements, although other types of transducers may be substituted. In this embodiment, the transmitting and receiving arrays are both linear and cross approximately at the mid point of each array and therefore give the sonar head a crucifix form.

In the preferred embodiment, the transducers 14 of the transmitting array and the receiving array have a half-wavelength spacing.

The Horizontal receiving array 13 creates a fan of static beams 16 and the vertical transmitting array generates a single beam 17, which scans in a vertical plane. Crossings of these beams create resolutions elements about 6°*6° in two angle directions.

The geometry of the transmitting and receiving arrays is known as a Mill's cross geometry and permits a significantly reduced number of elements 14 in each array, specifically "N instead of $N^2$

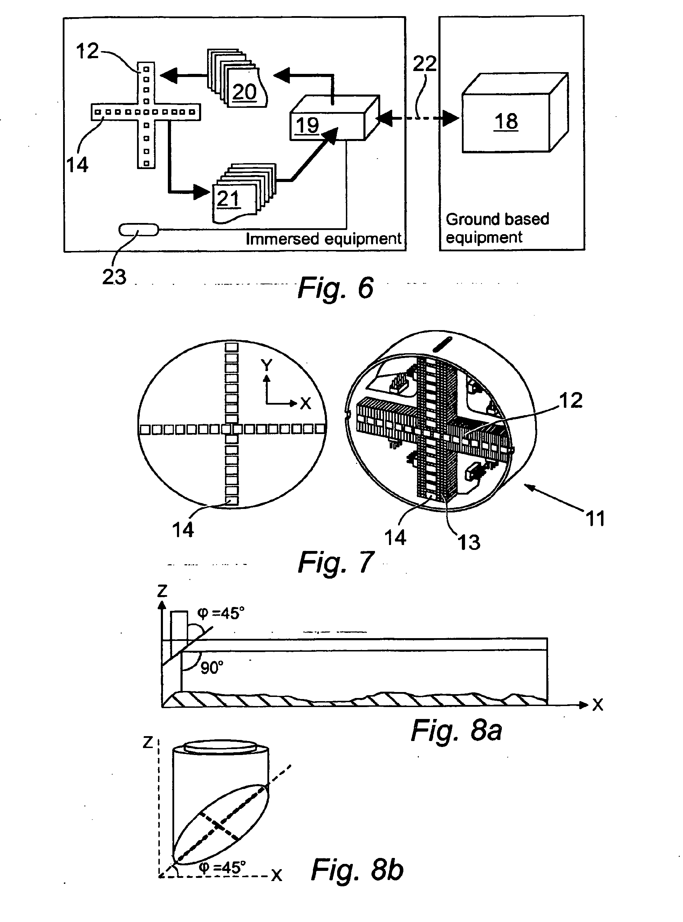

In the preferred embodiment, the transmitting-receiving array has 15 transmitting elements and 16 receiving elements on frequency F=100 KHz. As shown in Figure 7, such a number of elements provides identical beam patterns of transmitting and receiving beams with an angle width of 6,1° (-3dB level) after beamforming.

The array of the scanning head of the present invention is a 2D array in which vertical and horizontal beamforming is executed by signal processing. Therefore the scanning apparatus of the present invention has no moving or rotating mechanisms inside the sonar head which is a substantial improvement in relation to the know devices discussed above.

Furthermore, the dimension of the 2D array is less than the diameter of the apertures in the roof of the tank which allows the scanning apparatus to be lowered through an access point in the roof of the tank.

The general function of the scanning head of Figure 5 is illustrated schematically in Figure 6-which shows the operation of the scanning apparatus in a submerged environment and works as follows:

A remote PC 18 generates a pulse $S_0(t)$ of set form and time duration and sends it to a digital signal processor (DSP) 19.

The DSP 19 produces a set of pulses with calculated phase shifts (or time delays) $S_{ok}[t +\Delta t_k(\beta)]$, where k = 1,2..... 16, and the value of time delay $\Delta t_k(\beta)$ depends on vertical scanning angle $\beta$.

Power amplifiers 20 amplify the pulses which are then passed to the transducer elements 14 of the transmitting array whereupon a beam is formed in the vertical plane with steering angles of 0-90°.

The beam is reflected from a position on the surface of the layer under investigation within the tank and the reflected signals are detected by the receiving array whereupon they are transmitted to preamplifiers 21 and sent to the DSP 19.

The received signals are digitised and passed through cable 22 back to the PC where they are processed using known signal processing techniques.

Signal processing consists on some operations on received digital signals, including parallel beamforming in a horizontal plane for each vertical angle, correlation compression of received signals in all channels, threshold detection, calculation of time delays, slant distances and heights for all horizontal and vertical directions.

Following completion of the signal processing, a calculation can be made of the 3D topology of the layer of sludge and there a value of volume of sludge can be made.

A scanning apparatus according to the present invention can be used for different types of tanks and containers, which can have different design and dimensions.

In general, crude oil storage tanks have a large diameter D such as in the range of 50-100meters, but their height H may be around 5-6 times less. Many chemical tanks have opposite design in that their height H is significantly larger than their diameter D.

To reduce the influence of reverberation and minimize the number of entry points required in a container, different sonar heads may have the transmitting and receiving arrays mounted at different orientations to best suit the tank in which the apparatus is deployed.

For example, the sonar head illustrated in Figures 8a and b is particularly suited to use in wide shallow tanks as the transmitting and receiving arrays are inclined at an angle to the sonar head to reduce the effect of reverberation and in particular reflection from the walls of the container.

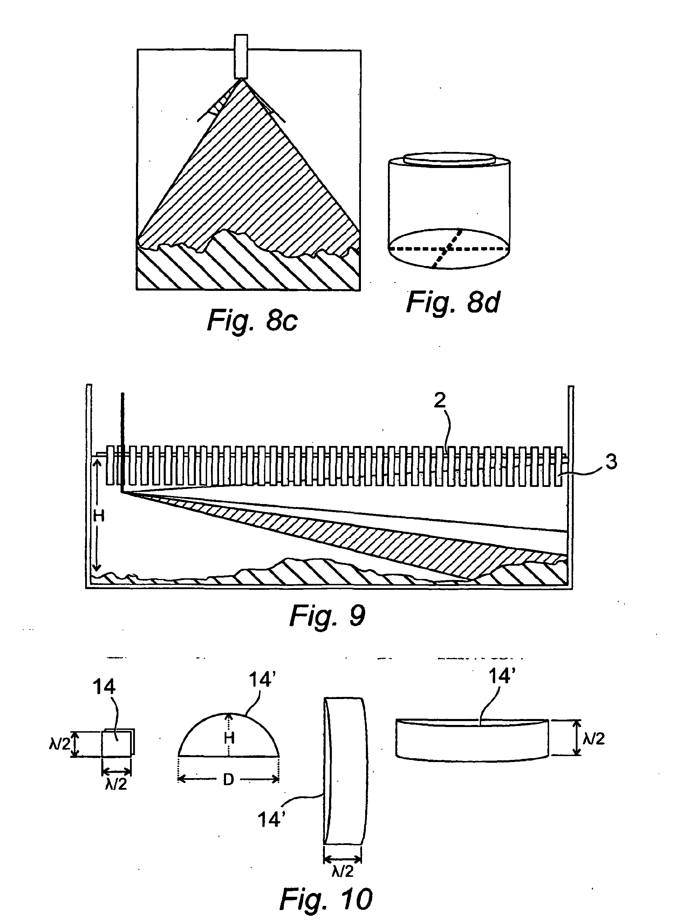

The sonar head illustrated in Figures 8c and d is more suited to use in containers in which the height is significantly greater than the diameter. In this case the transmitting and receiving arrays are mounted on a flat face of the sonar head.

The scanning apparatus of the present invention may be provided with replaceable sonar heads in order to allow for measurements to be taken in a wide variety of shaped and sized containers and tanks.

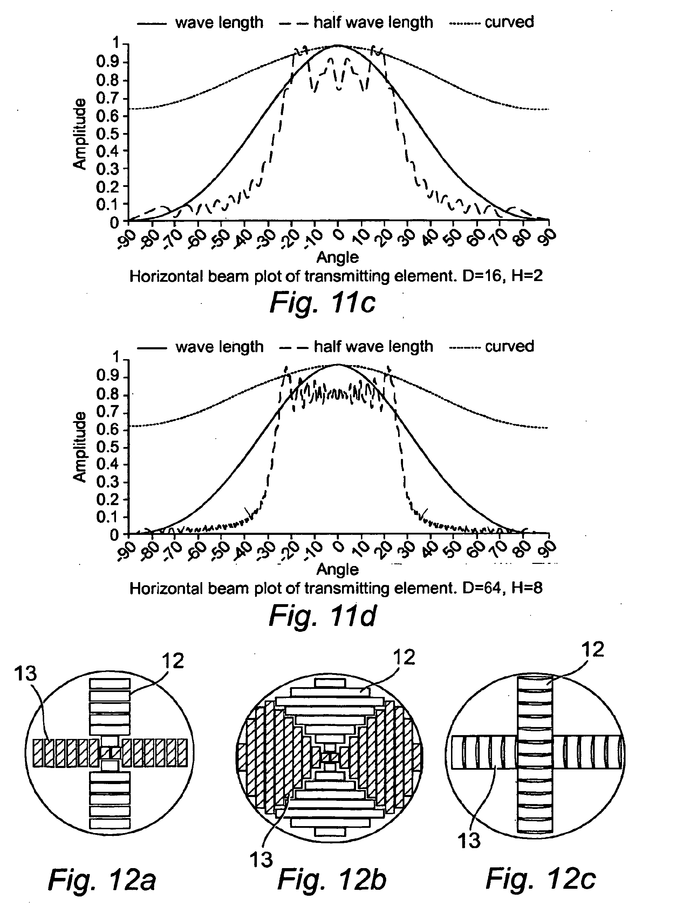

In the embodiments described above, the transmitting and receiving arrays are each described as a plurality of individual transducer elements 14 provided side by side. Other arrangements of transducer elements may be used whilst retaining the crucifix form of the scanning head 11 and several arrangements are illustrated in Figures 12 a-c.

The sizes of elements are proportional to wavelength D= $m\lambda$, H=$n\lambda$ where factors m and n are integers which values are defined by constructive reasons.

In the first example shown in Figure 12a, the horizontal dimension of the elements of the transmitting array 12 are greater than the vertical dimension in all but the elements in the centre of the array where the transmitting and receiving arrays cross. Similarly, in this embodiment, the vertical dimension of the elements of the receiving array 13 is greater than the horizontal dimension of those elements except for the centre elements in the array.

In the next example shown in Figure 12b the horizontal dimension of the elements of the transmitting 12 array and the vertical dimension of the elements of the receiving array 13 are extended to the point where they elements of the transmitting and receiving arrays almost meet. This arrangement provides an array which has the maximum area and therefore a maximum coefficient of filling as the greater the area of the array, the greater the power radiation from the array. The total area of PZT elements is large and provides for increased voltage and increased acoustic intensity. This is particularly useful where the scanning apparatus is used in crude oil which has a very high sound absorption. By increasing the voltage on the elements the source level can be increased.

The example shown in Figure 12c has a plurality of transducer elements 14 as shown in Figure 10 b-d in which the elements are substantially hemispherical in form.

In a wide variety of designs of oil tanks and other containers the presence of various mechanisms in them and also a varying level of oil can be the sources of significant reverberation, caused by repeated reflections of sound which will create false sludge heights to be detected, and, hence lead to errors in the measurement of the volume of sludge in the tank.

It is therefore necessary to approach the choice of characteristics of elements in the transmitting and receiving arrays carefully to ensure the optimum operating conditions are met. For example, the level of the oil, $H_{oil}$, is one of the major factors and is illustrated in Figure 9.

As shown in this Figure, a false reflection can occur for example from a reflection or re-reflection of a side lobe of the scanning beam from the supporting legs 3 on the roof 2 of the container which have a high reflective capacity whereas the direct scanning beam may reflected from a point on the surface of the layer of sludge under investigation which may have only a very low reflecting capacity.

Therefore the level of a useful echo- signal can be comparable or even less than the signal of reverberation. This situation will be significantly worse if the tank or container has as significant height but a relatively small diameter.

Using apodisation or shadowing of arrays the level of side lobes can be decreased on some reasonable values. However, very strong shadowing cannot be used due to the decreasing angle of resolution whereby greater shadowing means greater beam width.

A preferred geometry transducer element is shown in Figure 10 and a sonar apparatus comprising a transmitting array and a receiving array formed of such elements is shown in Figure 12c.

In this embodiment, the elements 14' have a hemi-spherical form with a height H and a diameter D.

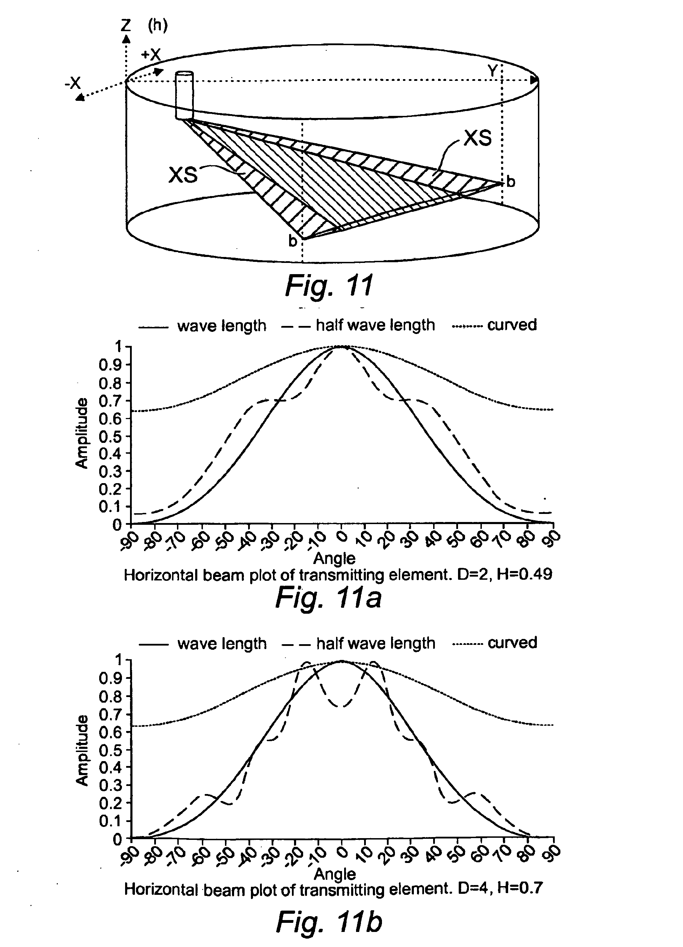

By varying parameters H and R it is possible to receive the desirable directivity pattern of single element in array. For example if the transmitting array comprises of half-wavelength elements after beamforming then this will result in a cross section XS as shown in Fig.11.

Such a wide beam in the horizontal plane means that transmitting signals will inevitably contact with tank walls, creating strong reflections and reverberation. To avoid these reflections the beam is compressed in the horizontal plane. Preferably the elements of the transmitting array will have the shape shown in Fig.10.

Various beam plots for different values (D, H) are presented in Fig. 11 a, b, c, d, in which D and H are 2 and 0.49, 4 and 0.7, 16 and 2 and 64 and 8 respectively.

These plots demonstrate the directivity patterns of curved elements C with different dimensions of D and H against wavelength A and half wavelength elements B.

As can be seen from the plots 11 a-d, by increasing the diameter D of the elements, the reflections and reverberations of the transmitting signals is reduced and the beam plot for the curved array elements shows an increasing reduction in signals produced by reflection or reverberation and a concentration of signals produced from the interface within the tank. The dimensions of the elements are limited only by the apertures through which the scanning head is inserted into the tank.

The use of a PC 18 with DSP 19 as illustrated in Figure 7 provides for space-time signal processing which allows for methods of signal processing which reduce systematic errors and errors caused by unknown conditions of sound propagation in such complex environments as crude oil. As a result of such methods the final accuracy of measurement of 3D-topography and volume rises.

The basic errors of 3D topography and volume estimation are caused by many factors which can be split into two groups - technical and physical. Technical factors are the result of inevitable technical limitations. Physical factors are the result of environments and peculiarities of sound propagation in a crude oil or other liquids.

The most important technical factors are side lobes and side background in beam patterns of arrays which have limited dimensions.

The most important physical factors include unknown types of sound -.scattering from the surface of the sludge, curvature of the sludge surface, unknown vertical distribution of the sound speed and unknown vertical distribution of temperature within the fluid in the tank.

The present invention provides for a method of reducing the errors which are generally present in measurements taken with known scanning apparatus. In particular, the receiving and transmitting arrays have shadowing (apodisation) which decreases the level of side lobes created up to about 18 dB which is a decreasing influence on the generation of side lobes and side background in beam patterns of arrays which have limited dimensions.

The estimation of the slant distances including heights and volume is carried out on the basis of measurement of the averaged times of flight i.e. time delays in all angular directions which is a decreasing influence on unknown types of sound scattering from the sludge.

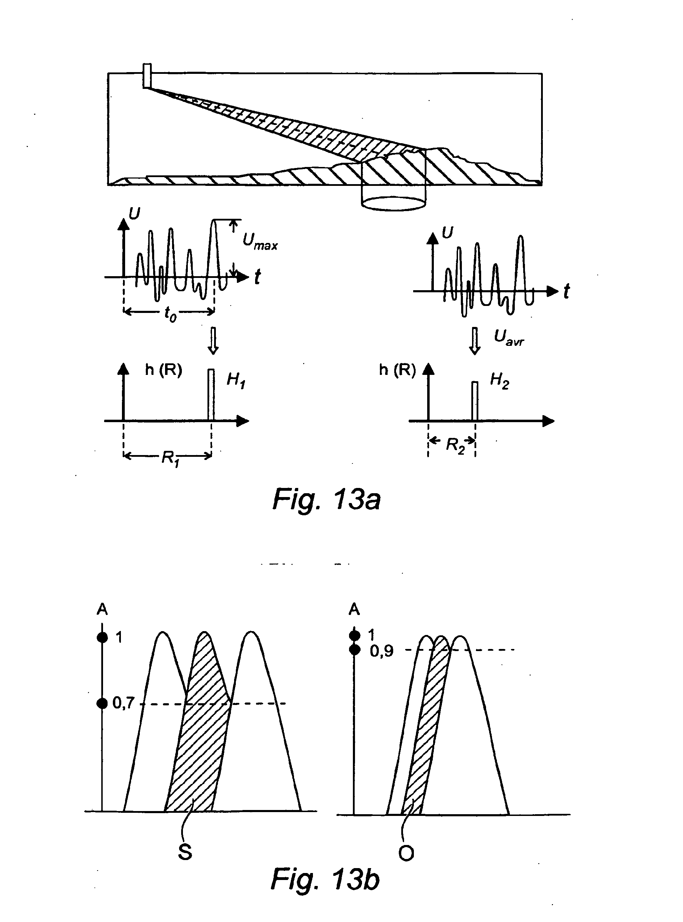

By way of illustration, Figure 13a illustrates an embodiment in which one beam illuminates an area of sludge within a tank. The reasonable model of sound scattering from the sludge shows that the illuminated area contains many scattering points. The present invention provides for a very high resolution on distance (high frequency band signals) and therefore the received echo-signal after correlation compression will contain many peaks of different amplitudes. By determining the amplitude of the peaks, the time delay to can be estimated and knowing all angles allows the slant distance and height to be calculated.

There are two ways to estimate to, either by determining the maximal value $U_{max}$ and associated time delay $t_0$ or by calculating the average amplitude of U and determining the time delay.

The latter is the more accurate as by averaging the amplitude provides a more accurate estimate of the distance and height and hence the volume.

The present invention also provides for signal processing of the received signals which includes beamforming in the horizontal and vertical planes using overlapping beams. Figure 13b illustrates the different results which can be obtained from using stacked S as opposed to overlapping O beams. In overlapping beams, the number of receiving beams in a receiving array is greater than the number of elements in the array. The angle step of vertical steering is less than the angle width of vertical beam thereby decreasing the influence of side lobes and side background in beam patterns of arrays which have limited dimensions and unknown types of sound scattering from the sludge

In acoustics it is considered, that beams or directivity patterns of arrays should be crossed at a level 0,7. At Gaussian form of directivity pattern such arrangement means that the maximum of one characteristic coincides with a minimum of the next. It appears that the number of such beams is equal to the number of elements in the array. However such an arrangement of beams is true for acoustic detection systems, and sometimes not true for imaging systems. Generally speaking for imaging systems it is better to have overlapping beams, as the form of surface is reproduced more precisely.

As discussed above, the temperature of the fluid within the container can affect the accuracy of the measurements taken.

Before measurement of sludge topography is carried out, the vertical profile of temperature T(h) and/or vertical distribution of sound speed C(h) is calculated on the full length of the oil layer. The data is then used in software to provide accurate estimations of slant ranges, form of surface, heights and volume.

The temperature profile T(h) can be measured using a separate instrument, for example by "multi-spot type sensor" or by "one-spot" type sensors which scan vertically within the tank manufactured by WEED INSTRUMENTS LTD or by similar devices.

A temperature sensor 23 may be included in a sonar head according to the present invention and before measurements are taken, a full vertical scan of sonar head is executed.

In a temperature range of 5-80° C(T) changes in a generally linear relationship. T(h) can be measured as discussed above and $C(H=H_o)$ or the reference speed of sound in oil can be measured on the surface by inserting a probe into the oil from the surface and using a standard velocimeter.

By measuring the speed of sound through the oil near the surface with a vertical beam in a horizontal position and combining this with data on the temperature profile within the container allows a determination of sound speed distribution on the depth of the tank.

Having data relating to the temperature and sound speed profiles and the design features of the oil tank enables the processing software to determine:-

- An optimum range of vertical scanning angles;
- Optimum number of entrée points;
- Predicted accuracy of an estimation of volume.

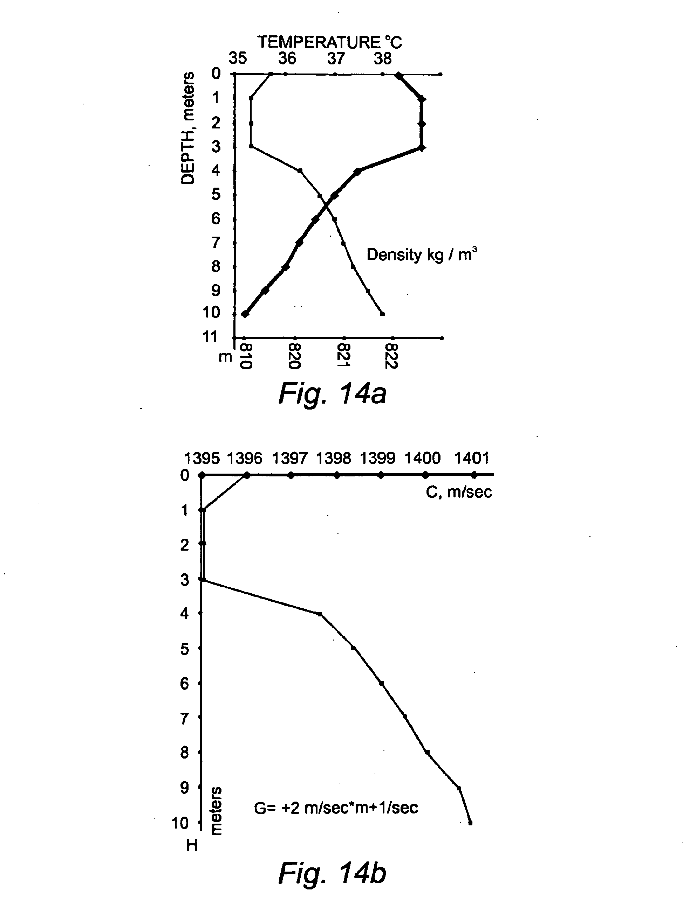

Figure 14a illustrates one example of the temperature profile of crude oil in a container of depth m.

It is clearly seen from Fig.8 that measuring the sound speed only on small heights (0-3 meters) and next extrapolation of data on all heights gives rise to significant errors. To use such extrapolation sound speed distribution must be uniform on all depths. But the real profile is very far from uniform. The recalculated sound speed profile is shown on Fig.14b.

Therefore for given temperature dependence sound speed as function of depth will be equal

$$C(h) = 1395 + G^*h$$

For vertical angles of scanning of 1-7° the errors of estimation of heights can be about 9-10% at such sound speed gradient. That means that topography of sludge covered by these angles will be estimated with the accuracy 9-10% instead of required 5%, or in two times worse. Note that this is a very modest error because of linear interpolation of sound speed.

The scanning apparatus of the present invention provides a reduced survey time and requires a limited number of entry points in the roof of the tank. Furthermore, the apparatus ensures a minimum level of reverberation noise throughout the tank and a high accuracy of measurements with predictability for different environments. Additionally, the apparatus can be deployed through the existing small diameter entry points provided by the legs of the floating roof of the tank, and is highly mechanically reliable.

It is envisaged that the weight of the apparatus will be such that a maximum of two operators would be required to manage the operation.

The scanning apparatus of the present invention generates real 3D images of a sludge layer within a container which is more accurate than those available from known apparatus. This allows for the accurate measurement of the topography of the layer of sludge and therefore the volume of sludge in the tank.

Further advantages of the present invention are also envisaged such as a reduced level of reverberation noise which is achieved by the use of wideband chirp signals as opposed to narrow band signals. Furthermore, the above described embodiments of array elements, high vertical directivity of the signals and shadowing of the receiving and transmitting arrays all contribute to the reduced levels of reverberation noise.

The present invention provides a scanning apparatus which has an improved accuracy over prior art devices and provides consistent and repeatable results and for high reliability of operation.

The time taken to perform a scan of a tank is also reduced with the apparatus of the present invention and the number of points at which the apparatus must be lowered into the tank are also reduced.

The present invention provides for a simplified apparatus in comparison to prior art devices with no moving parts. Furthermore, the size of the scanning head facilitates simple introduction of the apparatus into a tank for measurements to be taken.

**Claims**

1. An oil tank or oil container scanning apparatus (10), said apparatus comprising a sonar head (11) adapted for introduction into the container, **characterised in that** the sonar head comprises an array of electroacoustic transmitting elements (12) for transmitting a sound or ultrasound signal and an array of electroacoustic receiving elements (13), said receiving array being mounted at a position orthogonal to the transmitting array, the elements of the arrays having a substantially hemi-spherical form with a height H and diameter D and a thickness of half-wavelength of the transmitted signal and signal processing means for executing vertical and horizontal beamforming on the signals transmitted and received by said elements (12, 13).

2. A scanning apparatus according to claim 1, wherein each array comprises a plurality of transducer elements (14).

3. A scanning apparatus according to claim 1, wherein the transducers are PZT elements.

4. A scanning apparatus according to any of the preceding claims, wherein each transducer in the arrays has a half-wavelength spacing.

5. A scanning apparatus according to any of the preceding claims, wherein the transmitting and receiving arrays form a unitary body.

6. A scanning apparatus according to any of the preceding claims wherein the transmitting array is a linear array.

7. A scanning apparatus according to any of the preceding claims, wherein the receiving array is a horizontal array.

8. A scanning apparatus according to any of the preceding claims, wherein the apparatus further comprises a temperature sensor (23).

9. A scanning apparatus according to claim 8, wherein the apparatus is adapted for deployment within a fluid filled container and the temperature sensor is adapted to measure the temperature of the fluid within the container.

10. A scanning apparatus according to any of the preceding claims, wherein the sonar head is releasably mounted on the scanning apparatus.

11. A scanning apparatus according to claim 10, wherein the scanning apparatus comprises a plurality of replaceable sonar heads, each being mountable to the scanning apparatus at a different angle relative to an axis of the apparatus.

12. A scanning apparatus according to any of the preceding claims, wherein each array is linear and the arrays cross at about their mid points.

13. A scanning apparatus according to any of the preceding claims, wherein the transmitting array has 15 transmitting elements and the receiving array has 16 receiving elements.

14. A method of determining the 3D topography of a layer of material within an oil tank or oil container comprising the steps of locating a scanning apparatus comprising a sonar head (11) within the oil tank or oil container, wherein the sonar head comprises an array of electroacoustic transmitting elements (12) and an array electroacoustic receiving elements (13), said receiving array being mounted at a position orthogonal to the transmitting array, the elements of the arrays having a substantially hemi-spherical form with a height H and diameter D and a thickness of half-wavelength of the transmitted signal transmitting a sound or ultrasound signal from the transmitting elements of the scanning apparatus which produces a beam formed in the vertical plane which passes through the layer of material and is reflected from a position on the surface of the layer and detecting the reflected signal by the receiving elements of the scanning apparatus and executing signal processing on the transmitted and received signals using horizontal and vertical electronic beamforming to build up a 3D topographical measurement of the layer of material within the oil tank or oil container.

15. A method according to claim 14, wherein the method further comprises the step of measuring the temperature of the material within the container.

16. A method according to claim 14 or 15, wherein the scanning apparatus is introduced into the container via an aperture in the roof of the container.

17. A method according to any of claims 14-16, further comprising transmitting a signal from a signal processor to the transmitting array which produces a beam formed in the vertical plane.

18. A method according to claim 17, wherein the beam is reflected from a position on the surface of the layer and a reflected signal is detected by the receiving array.

**Patentansprüche**

1. Eine Öltank- oder Ölbehälter-Abtastvorrichtung (10), wobei die Vorrichtung einen Sonarkopf (11) beinhaltet, der zur Einführung in den Behälter angepasst ist, **dadurch gekennzeichnet, dass** der Sonarkopf eine Anordnung von elektroakustischen übertragenden Elementen (12) zum Übertragen eines Geräusches oder eines Ultraschallsignals und eine Anordnung von elektroakustischen empfangenden Elementen (13) beinhaltet, wobei die empfangende Anordnung in einer zu der übertragenden Anordnung orthogonalen Position angebracht ist, die Elemente der Anordnungen weisen eine im Wesentlichen hemisphärische Form mit einer Höhe H und einem Durchmesser D und einer Dicke von der halben Wellenlänge des übertragenen Signals und Signalverarbeitungsmittel zum Ausführen von vertikalem und horizontalem Beamforming an den durch die Elemente (12, 13) übertragenen und empfangenen Signalen auf.

2. Abtastvorrichtung gemäß Anspruch 1, wobei jede Anordnung eine Vielzahl von Wandlerelementen (14) beinhaltet.

3. Abtastvorrichtung gemäß Anspruch 1, wobei die Wandler PZT-Elemente sind.

4. Abtastvorrichtung gemäß einem der vorhergehenden Ansprüche, wobei jeder Wandler in den Anordnungen eine Beabstandung von einer halben Wellenlänge aufweist.

5. Abtastvorrichtung gemäß einem der vorhergehenden Ansprüche, wobei die übertragenden und empfangenden Anordnungen einen einheitlichen Körper bilden.

6. Abtastvorrichtung gemäß einem der vorhergehenden Ansprüche, wobei die übertragende Anordnung eine lineare Anordnung ist.

7. Abtastvorrichtung gemäß einem der vorhergehenden Ansprüche, wobei die empfangende Anordnung eine horizontale Anordnung ist.

8. Abtastvorrichtung gemäß einem der vorhergehenden Ansprüche, wobei die Vorrichtung ferner einen Temperatursensor (23) beinhaltet.

9. Abtastvorrichtung gemäß Anspruch 8, wobei die Vorrichtung zum Einsatz innerhalb eines mit Flüssigkeit gefüllten Behälters angepasst ist und der Temperatursensor angepasst ist, um die Temperatur der Flüssigkeit innerhalb des Behälters zu messen.

10. Abtastvorrichtung gemäß einem der vorhergehenden Ansprüche, wobei der Sonarkopf lösbar auf der Abtastvorrichtung angebracht ist.

11. Abtastvorrichtung gemäß Anspruch 10, wobei die Abtastvorrichtung eine Vielzahl von auswechselbaren Sonarköpfen beinhaltet, wobei jeder in einem unterschiedlichen Winkel relativ zu einer Achse der Vorrichtung an der Abtastvorrichtung anbringbar ist.

12. Abtastvorrichtung gemäß einem der vorhergehenden Ansprüche, wobei jede Anordnung linear ist und sich die Anordnungen etwa an ihren Mittelpunkten kreuzen.

13. Abtastvorrichtung gemäß einem der vorhergehenden Ansprüche, wobei die übertragende Anordnung 15 übertragende Elemente aufweist und die empfangende Anordnung 16 empfangende Elemente aufweist.

14. Ein Verfahren zum Bestimmen der 3D-Topographie einer Schicht Material innerhalb eines Öltanks oder Ölbehälters, das die folgenden Schritte beinhaltet: Anordnen einer Abtastvorrichtung, die einen Sonarkopf (11) beinhaltet, innerhalb des Öltanks oder Ölbehälters, wobei der Sonarkopf eine Anordnung von elektroakustischen übertragenden Elementen (12) und eine Anordnung elektroakustischer empfangender Elemente (13) beinhaltet, wobei die empfangende Anordnung in einer zu der übertragenden Anordnung orthogonalen Position angebracht ist, die Elemente der Anordnungen eine im Wesentlichen hemisphärische Form mit einer Höhe H und einem Durchmesser D und einer Dicke von der halben Wellenlänge des übertragenen Signals aufweisen, Übertragen eines Geräusches oder eines Ultraschallsignals von den übertragenden Elementen der Abtastvorrichtung, was einen in der vertikalen Ebene gebildeten Strahl produziert, der durch die Schicht Material läuft und von einer Position auf der Oberfläche der Schicht reflektiert wird, und Erfassen des reflektierten Signals durch die empfangenden Elemente der Abtastvorrichtung, und Ausführen von Signalverarbeitung an den übertragenen und empfangenen Signalen unter Verwendung von horizontalem und vertikalem elektronischem Beamforming, um eine topographische 3D-Messung der Schicht Material innerhalb des Öltanks oder Ölbehälters aufzubauen.

15. Verfahren gemäß Anspruch 14, wobei das Verfahren ferner den Schritt des Messens der Temperatur des Materials innerhalb des Behälters beinhaltet.

16. Verfahren gemäß Anspruch 14 oder 15, wobei die Abtastvorrichtung über eine Öffnung im Dach des Behälters in den Behälter eingeführt wird.

17. Verfahren gemäß einem der Ansprüche 14-16, das ferner das Übertragen eines Signals von einem Signalprozessor an die übertragende Anordnung, das einen in der vertikalen Ebene gebildeten Strahl produziert, beinhaltet.

**18.** Verfahren gemäß Anspruch 17, wobei der Strahl von einer Position auf der Oberfläche der Schicht reflektiert wird und ein reflektiertes Signal durch die empfangene Anordnung erfasst wird.

**Revendications**

**1.** Un appareil de balayage de réservoir d'huile ou de conteneur d'huile (10), ledit appareil comprenant une tête sonar (11) conçue pour être introduite dans le conteneur, **caractérisé en ce que** la tête sonar comprend un réseau d'éléments de transmission électroacoustiques (12) destinés à transmettre un signal sonore ou ultrasonore et un réseau d'éléments de réception électroacoustiques (13), ledit réseau de réception étant monté en une position orthogonale par rapport au réseau de transmission, les éléments des réseaux ayant une forme substantiellement hémi-sphérique avec une hauteur H et un diamètre D et une épaisseur d'une demi-longueur d'onde du signal transmis et un moyen de traitement de signaux destiné à exécuter une formation de faisceaux verticaux et horizontaux sur les signaux transmis et reçus par lesdits éléments (12, 13).

**2.** Un appareil de balayage selon la revendication 1, où chaque réseau comprend une pluralité d'éléments transducteurs (14).

**3.** Un appareil de balayage selon la revendication 1, où les transducteurs sont des éléments transducteurs piézoélectriques (PZT).

**4.** Un appareil de balayage selon n'importe lesquelles des revendications précédentes, où chaque transducteur dans les réseaux a un espacement d'une demi-longueur d'onde.

**5.** Un appareil de balayage selon n'importe lesquelles des revendications précédentes, où les réseaux de transmission et de réception forment un corps unitaire.

**6.** Un appareil de balayage selon n'importe lesquelles des revendications précédentes où le réseau de transmission est un réseau linéaire.

**7.** Un appareil de balayage selon n'importe lesquelles des revendications précédentes, où le réseau de réception est un réseau horizontal.

**8.** Un appareil de balayage selon n'importe lesquelles des revendications précédentes, où l'appareil comprend en sus un capteur de température (23).

**9.** Un appareil de balayage selon la revendication 8, où l'appareil est conçu pour être déployé à l'intérieur d'un conteneur rempli de fluide et le capteur de température est conçu pour mesurer la température du fluide à l'intérieur du conteneur.

**10.** Un appareil de balayage selon n'importe lesquelles des revendications précédentes, où la tête sonar est montée sur l'appareil de balayage de manière à pouvoir être détachée.

**11.** Un appareil de balayage selon la revendication 10, où l'appareil de balayage comprend une pluralité de têtes sonar remplaçables, chacune pouvant être montée sur l'appareil de balayage à un angle différent relativement à un axe de l'appareil.

**12.** Un appareil de balayage selon n'importe lesquelles des revendications précédentes, où chaque réseau est linéaire et les réseaux se croisent à peu près au niveau de leurs points milieux.

**13.** Un appareil de balayage selon n'importe lesquelles des revendications précédentes, où le réseau de transmission a 15 éléments de transmission et le réseau de réception a 16 éléments de réception.

**14.** Un procédé de détermination de la topographie en 3D d'une couche de matière à l'intérieur d'un réservoir d'huile ou d'un conteneur d'huile comprenant les étapes consistant à placer un appareil de balayage comprenant une tête sonar (11) à l'intérieur du réservoir d'huile ou du conteneur d'huile, où la tête sonar comprend un réseau d'éléments de transmission électroacoustiques (12) et un réseau éléments de réception électroacoustiques (13), ledit réseau de réception étant monté en une position orthogonale par rapport au réseau de transmission, les éléments des réseaux ayant une forme substantiellement hémi-sphérique avec une hauteur H et un diamètre D et une épaisseur d'une demi-longueur d'onde du signal transmis, à transmettre un signal sonore ou ultrasonore à partir des éléments de transmission de l'appareil de balayage, ce qui produit un faisceau formé dans le plan vertical qui passe à travers la couche de matière et est réfléchi depuis une position sur la surface de la couche et à détecter le signal réfléchi par les éléments de réception de l'appareil de balayage et à exécuter un traitement de signal sur les signaux transmis et reçus à l'aide d'une formation de faisceaux électroniques horizontaux et verticaux pour constituer une mesure topographique en 3D de la couche de matière à l'intérieur du réservoir d'huile ou du conteneur d'huile.

**15.** Un procédé selon la revendication 14, où le procédé comprend en sus l'étape consistant à mesurer la température de la matière à l'intérieur du conteneur.

**16.** Un procédé selon la revendication 14 ou la revendication 15, où l'appareil de balayage est introduit dans le conteneur via une ouverture dans le toit du conteneur.

**17.** Un procédé selon n'importe lesquelles des revendications 14 à 16, comprenant en sus le fait de transmettre un signal d'une unité de traitement de signaux au réseau de transmission, ce qui produit un faisceau formé dans le plan vertical.

**18.** Un procédé selon la revendication 17, où le faisceau est réfléchi depuis une position sur la surface de la couche et un signal réfléchi est détecté par le réseau de réception.

*Fig. 1*

*Fig. 2*

Fig. 3

Fig. 4

Fig. 5

**Fig. 6**

**Fig. 7**

**Fig. 8a**

**Fig. 8b**

*Fig. 8c*

*Fig. 8d*

2

3

H

*Fig. 9*

14

λ/2

λ/2

14'

H

D

14'

14'

λ/2

14'

λ/2

*Fig. 10*

Fig. 11

Horizontal beam plot of transmitting element. D=2, H=0.49

Fig. 11a

Horizontal beam plot of transmitting element. D=4, H=0.7

Fig. 11b

—— wave length　　— — half wave length　　······· curved

Horizontal beam plot of transmitting element. D=16, H=2

*Fig. 11c*

—— wave length　　— — half wave length　　······· curved

Horizontal beam plot of transmitting element. D=64, H=8

*Fig. 11d*

*Fig. 12a*　　　　*Fig. 12b*　　　　*Fig. 12c*

Fig. 13a

Fig. 13b

## Fig. 14a

TEMPERATURE °C

Density kg / m³

DEPTH, meters

35 36 37 38

810 820 821 822

*Fig. 14a*

## Fig. 14b

1395 1396 1397 1398 1399 1400 1401

C, m/sec

meters

G= +2 m/sec*m+1/sec

H

*Fig. 14b*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5173882 A
- US 5953287 A

- WO 5953287 A